# EUROPÄISCHE PATENTANMELDUNG

(11) **EP 3 035 485 A1**
(43) Veröffentlichungstag der Anmeldung: **22.06.2016**
(21) Anmeldenummer: 14198767.7
(22) Anmeldetag: 18.12.2014
(51) Int. Cl.: H02J 7/00

(54) **Schaltbares Interface für Ladegeräte**

(71) Anmelder: HILTI Aktiengesellschaft, 9494 Schaan (LI)
(72) Erfinder: Hunger, Markus, 86161 Augsburg (DE)
(74) Vertreter: Hilti Aktiengesellschaft Corporate Intellectual Property

(57) **Zusammenfassung**

Ladevorrichtung zum Laden eines Akkumulators, enthaltend eine Steuerungseinrichtung und wenigstens eine elektromechanische Schnittstelleneinrichtung zum Verbinden wenigstens eines Akkumulators mit dem Ladegerät sowie zum Versorgen des Akkumulators mit einer elektrischer Spannung.

Die Schnittstelleneinrichtung enthält wenigstens eine erste Anschlussstelle und eine zweite Anschlussstelle und die Schnittstelleneinrichtung ist in wenigstens eine erste Position und in eine zweite Position einstellbar, wobei die erste Anschlussstelle zum Laden eines ersten Akkumulators verwendbar ist, wenn die Schnittstelle in der ersten Position eingestellt ist und die zweite Anschlussstelle zum Laden eines zweiten Akkumulators verwendbar ist, wenn die Schnittstelle in der zweiten Position eingestellt ist.

## Beschreibung

Die vorliegende Erfindung bezieht sich auf eine Ladevorrichtung zum Laden wenigstens eines Akkumulators, enthaltend wenigstens eine elektromechanische Schnittstelleneinrichtung zum Verbinden wenigstens eines Akkumulators mit dem Ladegerät sowie zum Versorgen des Akkumulators mit einer elektrischer Spannung und eine Steuerungseinrichtung.

Elektrische Werkzeugmaschinen, wie beispielsweise Bohrhämmer, Kreissägen, Winkelschleifer oder ähnliches, werden häufig mit Hilfe eines Akkumulators mit elektrischer Spannung versorgt. Die Akkumulatoren sind dabei gewöhnlich so gestaltet, dass diese mit der Werkzeugmaschine verbunden und auch wieder gelöst werden können. Die lösbare Verbindung zwischen Akkumulator und Werkzeugmaschine dient unter anderem dazu, einen durch das Arbeiten mit der Werkzeugmaschine entleerten Akkumulator durch eine Akkumulator-Ladevorrichtung (auch Akkumulator-Ladegerät oder Ladegerät genannt) wieder mit elektrischer Spannung aufzuladen. Nachdem der Akkumulator mittels des Ladegeräts wieder in einen aufgeladenen Zustand versetzt wurde, kann der Akkumulator erneut mit der Werkzeugmaschine verbunden werden, um diese wieder mit elektrischer Spannung zu versorgen. Durch eine andauernde Verwendung und insbesondere durch ein häufiges Aufladen wird der Akkumulator stark beansprucht, sodass dieser nach einer gewissen Zeitspanne nicht mehr das ursprüngliche Leistungsvermögen aufweist. Ein regelmäßiges Ersetzen eines stark beanspruchten Akkumulators durch einen neuen, leistungsstärkeren Akkumulator ist dabei eine nicht unübliche Maßnahme. Da jedoch die Werkzeugmaschine sowie das Ladegerät nicht notwendigerweise auch zusammen mit dem Akkumulator ersetzt werden, besteht häufig das Problem, dass der neue Akkumulator nicht mit dem alten, d.h. ursprünglichen Akkumulator identisch ist. Aufgrund von Weiterentwicklungsmassnahmen kann es möglich sein, dass der neue Akkumulator eine neue elektromechanische Schnittstelleneinrichtung aufweist, die zwar kompatibel mit der Werkzeugmaschine ist, jedoch inkompatibel mit dem ursprünglichen Ladegerät.

Darüber hinaus besteht die Möglichkeit, dass entsprechende Weiterentwicklungsmassnahmen an dem Akkumulator-Ladegerät dazu führen, dass ein neues Ladegerät, welches aufgrund von Verschleißerscheinungen das ursprüngliche Ladegerät ersetzten soll, nicht kompatibel zu einem älteren Akkumulator ist.

Als Folge daraus kann ein Inkompatibilitätsproblem zwischen Akkumulator und Ladegerät bestehen.

Aufgabe der vorliegenden Erfindung ist es daher, das vorstehend genannte Problem zu lösen und insbesondere eine Ladevorrichtung zum Laden eines Akkumulators zur Verfügung zu stellen, mit der die Kompatibilität zwischen dem Akkumulator und dem Ladegerät verbessert werden kann.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Es wird eine Ladevorrichtung zum Laden wenigstens eines Akkumulators bereitgestellt, enthaltend eine Steuerungseinrichtung und wenigstens eine elektromechanische Schnittstelleneinrichtung zum Verbinden wenigstens eines Akkumulators mit dem Ladegerät sowie zum Versorgen des Akkumulators mit einer elektrischer Spannung.

Erfindungsgemäß ist vorgesehen, dass die Schnittstelleneinrichtung wenigstens eine erste Anschlussstelle und eine zweite Anschlussstelle enthält und die Schnittstelleneinrichtung in wenigstens eine erste Position und in eine zweite Position einstellbar ist, wobei die erste Anschlussstelle zum Laden eines ersten Akkumulators verwendbar ist, wenn die Schnittstelle in der ersten Position eingestellt ist und die zweite Anschlussstelle zum Laden eines zweiten Akkumulators verwendbar ist, wenn die Schnittstelleneinrichtung in der zweiten Position eingestellt ist. Hierdurch können, entsprechend der Einstellung der Schnittstelleneinrichtung, verschiedene Arten von Akkumulatoren durch ein Ladegerät geladen werden und folglich die Kompatibilität zwischen dem Akkumulator und dem Ladegerät verbessert werden.

Gemäß einer weiteren vorteilhaften Ausführungsform der vorliegenden Erfindung kann es möglich sein, dass die erste Anschlussstelle eine erste Anzahl an Anschlusselementen und die zweite Anschlussstelle eine zweite Anzahl an Anschlusselementen enthält, wobei die erste Anzahl an Anschlusselementen einer Anzahl an Kontaktelementen des ersten Akkumulators und die zweite Anzahl an Anschlusselementen einer Anzahl an Kontaktelementen des zweiten Akkumulators entspricht. Hierdurch wird dem Anwender der Ladevorrichtung auf einfache Art und Weise angezeigt, an welche Anschlussstelle der Schnittstelleneinrichtung der entsprechende Akkumulator angeschlossen werden soll.

Um auf einfache Art und Weise eine korrekte Durchführung eines Ladevorgangs für einen entsprechend angeschlossenen Akkumulator zu gewährleisten, kann gemäß einer weiteren vorteilhaften Ausführungsform der vorliegenden Erfindung es möglich sein, dass eine erste Ladekonfiguration zum Laden des ersten Akkumulators gewählt wird, wenn die Schnittstelleneinrichtung in der ersten Position eingestellt ist und der erste Akkumulator mit der ersten Anschlussstelle verbunden ist, und dass eine zweite Ladekonfiguration zum Laden des zweiten Akkumulators gewählt wird, wenn die Schnittstelleneinrichtung in der zweiten Position eingestellt ist und der zweite Akkumulator mit der zweiten Anschlussstelle verbunden ist.

Entsprechend einer weiteren vorteilhaften Ausführungsform der vorliegenden Erfindung kann es möglich sein, dass die Schnittstelleneinrichtung eine Anbindungsstelle mit einer Anzahl an Anbindungselementen zum Verbinden der Schnittstelleneinrichtung mit der Steuerungseinrichtung enthält, wobei die Anzahl an Anbindungselementen der größeren Anzahl an Anschlusselementen der ersten oder zweiten Anschlussstelle entspricht. Hierdurch kann sichergestellt werden, dass sowohl die erste Anschlussstelle mit einer ersten Anzahl an Anschlusselementen als auch die zweite Anschlussstelle mit einer zweiten Anzahl an Anschlusselementen mit der Anbindungsstelle verbindbar ist.

Gemäß einer weiteren vorteilhaften Ausführungsform der vorliegenden Erfindung kann es möglich sein, dass die Schnittstelleneinrichtung eine erste Anbindungsstelle und eine zweite Anbindungsstelle enthält zum Verbinden der Schnittstelleneinrichtung mit der Steuerungseinrichtung, wobei die erste Anbindungsstelle eine erste Anzahl an Anbindungselementen und die zweite Anbindungsstelle eine zweite Anzahl an Anbindungselementen enthält, wobei die erste Anzahl an Anbindungselementen der ersten Anzahl an Anschlusselementen und die zweite Anzahl an Anbindungselementen der zweiten Anzahl an Anschlusselementen entspricht. Durch die Verwendung einer ersten und zweiten Anbindungsstelle ist es möglich, eine relativ einfach aufgebaute bzw. simple Elektronik zur Steuerung der Ladevorrichtung zu verwenden, da anhand der jeweiligen Verbindung der ersten oder zweiten Anschlussstelle mit der zugehörigen ersten oder zweiten Anbindungsstelle bereits eine eindeutige Bestimmung der ersten oder zweiten Position der Schnittstelleneinrichtung bzw. des ersten oder zweiten Akkumulators vorliegt. Die hierbei verwendete Elektronik zur Steuerung der Ladevorrichtung kann daher ohne Einrichtung zum Erkennen der ersten oder zweiten Position der Schnittstelleneinrichtung bzw. zum Erkennen des jeweils mit der Schnittstelleneinrichtung angeschlossenen ersten oder zweiten Akkumulators ausgestaltet sein.

Entsprechend einer weiteren vorteilhaften Ausführungsform der vorliegenden Erfindung kann es möglich sein, dass anhand der Anzahl an Verbindungen zwischen Anschlusselementen und Anbindungselementen die erste oder zweite Position der Schnittstelleneinrichtung und/oder der erste oder zweite Akkumulator, welcher mit der Schnittstelleneinrichtung verbunden ist, erkennbar ist. Hierdurch kann auf einfache Art und Weise das Erkennen der ersten oder zweiten Position der Schnittstelleneinrichtung bzw. das Erkennen des jeweils mit der Schnittstelleneinrichtung angeschlossenen ersten oder zweiten Akkumulators ausgestaltet sein.

Entsprechend einer weiteren vorteilhaften Ausführungsform der vorliegenden Erfindung kann es möglich sein, dass mindestens ein Anschlusselement der ersten Anschlussstelle sowie mindestens ein Anschlusselement der zweiten Anschlussstelle wenigstens zum Empfangen von Informationen von dem ersten Akkumulator und dem zweiten Akkumulator an die Ladevorrichtung ausgestaltet ist, sodass entsprechend dem jeweils angeschlossenen ersten oder zweiten Akkumulator eine erste Ladekonfiguration zum Laden des ersten Akkumulators oder eine zweite Ladekonfiguration zum Laden des zweiten Akkumulators einstellbar ist. Hierdurch ist der jeweils angeschlossene Akkumulator auf einfache Art und Weise in der Lage in dem Ladegerät die jeweils passende Ladekonfiguration einzustellen.

Um eine möglichst einfache sowie zuverlässige Erkennung der Schnittstelleneinrichtung in der ersten oder zweiten Position für das Ladegerät zu gewährleisten, kann gemäß einer weiteren vorteilhaften Ausführungsform der vorliegenden Erfindung es möglich sein, dass wenigstens ein Mikroschalter vorgesehen ist zum Erkennen, ob die Schnittstelleneinrichtung in der ersten Position oder zweiten Position eingestellt ist. Der Mikroschalter kann beispielsweise zwischen der Schnittstelleneinrichtung und einem Gehäuse der Ladevorrichtung positioniert sein.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Ansicht einer erfindungsgemäßen Ladevorrichtung gemäß einer ersten Ausführungsform mit einer Schnittstelleneinrichtung in einer ersten Position;
- Fig. 2: eine schematische Ansicht der erfindungsgemäßen Ladevorrichtung gemäß der ersten Ausführungsform mit der Schnittstelleneinrichtung in einer zweiten Position;
- Fig. 3: eine schematische Ansicht der erfindungsgemäßen Ladevorrichtung gemäß einer zweiten Ausführungsform mit der Schnittstelleneinrichtung in einer ersten Position;
- Fig. 4: eine schematische Ansicht der erfindungsgemäßen Ladevorrichtung gemäß der zweiten Ausführungsform mit der Schnittstelleneinrichtung in einer zweiten Position;
- Fig. 5: eine schematische Ansicht der erfindungsgemäßen Ladevorrichtung gemäß einer dritten Ausführungsform mit der Schnittstelleneinrichtung in einer ersten Position;
- Fig. 6: eine schematische Ansicht der erfindungsgemäßen Ladevorrichtung gemäß der dritten Ausführungsform mit der Schnittstelleneinrichtung in einer zweiten Position;
- Fig. 7: eine schematische Ansicht der erfindungsgemäßen Ladevorrichtung gemäß einer vierten Ausführungsform mit der Schnittstelleneinrichtung in einer ersten Position;
- Fig. 8: eine schematische Ansicht der erfindungsgemäßen Ladevorrichtung gemäß der vierten Ausführungsform mit der Schnittstelleneinrichtung in einer zweiten Position;
- Fig. 9: eine schematische Ansicht der erfindungsgemäßen Ladevorrichtung gemäß einer fünften Ausführungsform mit der Schnittstelleneinrichtung in einer ersten Position;
- Fig. 10: eine schematische Ansicht der erfindungsgemäßen Ladevorrichtung gemäß der fünften Ausführungsform mit der Schnittstelleneinrichtung in einer zweiten Position;
- Fig. 11: eine schematische Ansicht der erfindungsgemäßen Ladevorrichtung gemäß einer sechsten Ausführungsform mit der Schnittstelleneinrichtung in einer ersten Position;
- Fig. 12: eine schematische Ansicht der erfindungsgemäßen Ladevorrichtung gemäß der sechsten Ausführungsform mit der Schnittstelleneinrichtung in einer zweiten Position;
- Fig. 13: eine Seitenansicht der erfindungsgemäßen Ladevorrichtung gemäß einer siebten Ausführungsform mit der Schnittstelleneinrichtung in einer ersten Position und einem ersten Akkumulator;
- Fig. 14: eine Draufsicht auf die erfindungsgemäße Ladevorrichtung gemäß der siebten Ausführungsform mit der Schnittstelleneinrichtung in einer ersten Position;
- Fig. 15: eine Seitenansicht der erfindungsgemäßen Ladevorrichtung gemäß der siebten Ausführungsform mit der Schnittstelleneinrichtung in einer zweiten Position und einem zweiten Akkumulator;
- Fig. 16: eine Draufsicht auf die erfindungsgemäße Ladevorrichtung gemäß der siebten Ausführungsform mit der Schnittstelleneinrichtung in einer zweiten Position;
- Fig. 17: eine Seitenansicht der erfindungsgemäßen Ladevorrichtung gemäß einer achten Ausführungsform mit der Schnittstelleneinrichtung in einer ersten Position und einem ersten Akkumulator; und
- Fig. 18: eine Seitenansicht der erfindungsgemäßen Ladevorrichtung gemäß der achten Ausführungsform mit der Schnittstelleneinrichtung in einer zweiten Position und einem zweiten Akkumulator.

### Ausführungsbeispiel:

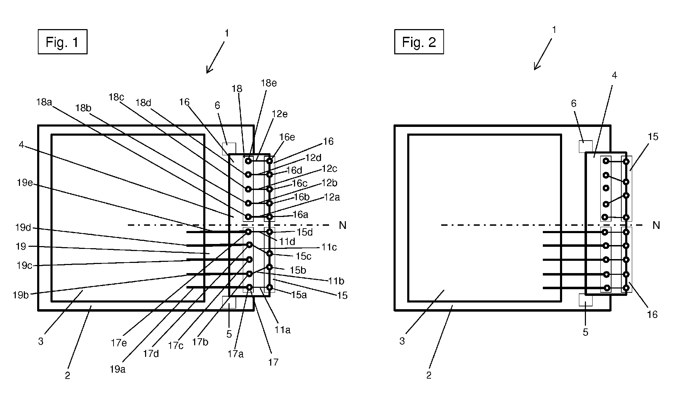

Fig. 1 und 2 zeigen eine erfindungsgemäße Ladevorrichtung 1 zum Laden wenigstens eines Akkumulators gemäß einer ersten Ausführungsform.

Die Ladevorrichtung 1 enthält im Wesentlichen ein Gehäuse 2, eine Steuerungseinrichtung 3, eine Schnittstelleneinrichtung 4, einen ersten Mikroschalter 5, einen zweiten Mikroschalter 6 und eine Stromversorgung. Die Stromversorgung ist in Form eines Netzstromkabels gestaltet, welche an eine Netzstromquelle (Steckdose) angeschlossen werden kann. In den Figuren ist die Stromversorgung nicht dargestellt.

Die Steuerungseinrichtung 3 ist in dem Gehäuse 2 positioniert. Auf der Steuerungseinrichtung 3 ist eine Elektronik gespeichert zur Steuerung und Regelung der Ladevorrichtung 1 und insbesondere zur Steuerung und Regelung des Ladevorgangs für einen mit der Ladevorrichtung 1 verbunden Akkumulator. Die Steuerungseinrichtung 3 verfügt dabei über eine erste erste Ladekonfiguration zum Laden eines ersten Akkumulators sowie eine zweite Ladekonfiguration zum Laden eines zweiten Akkumulators. Die Steuerungseinrichtung 3 ist so ausgestaltet, dass automatisch die erste Ladekonfiguration ausgewählt und eingestellt wird, wenn die Ladevorrichtung 1 erkennt, dass der erste Akkumulator mit der Schnittstelleneinrichtung 4 verbunden ist. Darüber hinaus wird die zweite Ladekonfiguration ausgewählt und eingestellt wird, wenn die Ladevorrichtung erkennt, dass der zweite Akkumulator mit der Schnittstelleneinrichtung 4 verbunden ist.

Die Schnittstelleneinrichtung 4 dient dazu wenigstens einen (nicht gezeigten) Akkumulator mit der Ladevorrichtung 1 zu verbinden. Die Schnittstelleneinrichtung 4 ist dabei so ausgestaltet, dass elektrische Spannung, Informationen und Daten bi-direktional zwischen der Ladevorrichtung 1 und dem jeweils angeschlossen Akkumulator ausgetauscht werden können. Die Schnittstelleneinrichtung 4 enthält eine erste Anschlussstelle 15 und eine zweite Anschlussstelle 16. Die erste Anschlussstelle 15 enthält vier Anschlusselemente 15a, 15b, 15c, 15d sowie fünf Anbindungselemente 17a, 17b, 17c, 17d, 17e. Die zweite Anschlussstelle 16 enthält fünf Anschlusselemente 16a, 16b, 16c, 16d, 16e sowie fünf Anbindungselemente 18a, 18b, 18c, 18d, 18e. In der ersten Anschlussstelle 15 stehen die vier Anschlusselemente 15a, 15b, 15c, 15d mit den fünf Anbindungselementen 17a, 17b, 17c, 17d, 17e über vier Anbindungsleitungen 11a, 11 b, 11 c, 11 d in Verbindung. In der zweiten Anschlussstelle 16 stehen die fünf Anschlusselemente 16a, 16b, 16c, 16d, 16e mit den fünf Anbindungselementen 18a, 18b, 18c, 18d, 18e über fünf Anbindungsleitungen 12a, 12b, 12c, 12d, 12e in Verbindung. In der ersten Anschlussstelle 15 sind die vier Anschlusselemente 15a, 15b, 15c, 15d dabei so mit den fünf Anbindungselementen 17a, 17b, 17c, 17d, 17e verbunden, dass ein Anbindungselement 17c nicht mit einem der vier Anschlusselement 15a, 15b, 15c, 15d verbunden ist. Die Anschlusselemente 15a, 15b, 15c, 15d der ersten Anschlussstelle 15 dienen dazu, mit den Kontaktelementen eines ersten Akkumulators verbunden zu werden. Die Anschlusselemente 16a, 16b, 16c, 16d, 16e der zweiten Anschlussstelle 16 dienen dazu, mit den Kontaktelementen eines zweiten Akkumulators verbunden zu werden. Es ist somit vorgesehen, dass an die erste Anschlussstelle 15 ein erster Akkumulator und an die zweite Anschlussstelle 16 ein zweiter Akkumulator anschließbar ist. Weder der erste noch der zweite Akkumulator sind in den Figuren 1 bis 12 gezeigt.

Gemäß der ersten Ausführungsform der Ladevorrichtung 1 enthält die Steuerungseinrichtung 3 eine Verbindungseinrichtung 19 mit fünf Verbindungsleitungen 19a, 19b, 19c, 19d, 19e mit denen die fünf Anbindungselemente 17a, 17b, 17c, 17d, 17e der ersten Anschlussstelle 15 oder die fünf Anbindungselemente 18a, 18b, 18c, 18d, 18e der zweiten Anschlussstelle 16 mit der Steuerungseinrichtung 3 verbunden werden können.

Wie in den Figuren 1 und 2 dargestellt, ist die Ladevorrichtung 1 gemäß der ersten Ausführungsform so ausgestaltet, dass die Schnittstelleneinrichtung 4 in einer ersten Position oder in einer zweiten Position einstellbar ist. In Fig. 1 befindet sich die Schnittstelleneinrichtung 4 in der ersten Position und in Fig. 2 befindet sich die Schnittstelleneinrichtung 4 in der zweiten Position.

Wie in Fig. 1 gezeigt, ist die Schnittstelleneinrichtung 4 in der ersten Position so ausgerichtet, dass die fünf Anbindungselemente 17a, 17b, 17c, 17d, 17e der ersten Anschlussstelle 15 mit den fünf Verbindungsleitungen 19a, 19b, 19c, 19d, 19e der Steuerungseinrichtung 3 in Verbindung stehen. In der ersten Position der Schnittstelleneinrichtung 4 besteht somit innerhalb der ersten Anschlussstelle 15 eine Verbindung von den vier Anschlusselementen 15a, 15b, 15c, 15d über vier der fünf Anbindungselemente 17a, 17b, 17d, 17e zu der Steuerungseinrichtung 3, sodass ein mit den vier Anschlusselementen 15a, 15b, 15c, 15d verbundener Akkumulator über die Steuerungseinrichtung 3 mit elektrischer Spannung versorgt werden kann.

Um die Schnittstellenvorrichtung 4 von der ersten Position in die zweite Position zu bringen, wird (gemäß der ersten Ausführungsform der Ladevorrichtung) die Schnittstelleneinrichtung 4 von dem Gehäuse 2 der Ladevorrichtung 1 entfernt, 180° um die Achse N gedreht und wieder an dem Gehäuse 2 der Ladevorrichtung 1 befestigt. Die Schnittstelleneinrichtung 4 befindet sich in der ersten und zweiten Position an derselben Stelle des Gehäuses 2 der Ladevorrichtung 1, jedoch ist die Schnittstelleneinrichtung 4 in der ersten und zweiten Position in unterschiedlichen Ausrichtungen (180° um die Achse N gedreht) zu dem Gehäuse 2 der Ladevorrichtung 1 positioniert. Wie nachfolgend anhand der weiteren Ausführungsbeispiele der Ladevorrichtung 1 beschrieben wird, kann die Schnittstelleneinrichtung 4 auf unterschiedliche Weise von der ersten Position in die zweite Position bewegt bzw. gebracht werden.

Wie in Fig. 2 gezeigt, ist die Schnittstelleneinrichtung 4 in der zweiten Position so ausgerichtet, dass die fünf Anbindungselemente 18a, 18b, 18c, 18d, 18e der zweiten Anschlussstelle 16 mit den fünf Verbindungsleitungen 19a, 19b, 19c, 19d, 19e der Steuerungseinrichtung 3 in Verbindung stehen. In der zweiten Position besteht somit in der zweiten Anschlussstelle 16 eine Verbindung von den fünf Anschlusselementen 16a, 16b, 16c, 16d, 16e über die fünf Anbindungselemente 18a, 18b, 18c, 18d, 18e zu der Steuerungseinrichtung 3, sodass ein mit den fünf Anschlusselementen 16a, 16b, 16c, 16d, 16e verbundener Akkumulator über die Steuerungseinrichtung 3 mit elektrischer Spannung versorgt werden kann.

Wie in Fig. 1 und 2 dargestellt, sind der erste Mikroschalter 5 und zweite Mikroschalter 6 sind so in dem Gehäuse 2 der Ladevorrichtung 1 positioniert, dass die Schnittstelleneinrichtung 4 den ersten Mikroschalter 5 aktiviert, wenn sich die Schnittstelleneinrichtung 4 in der ersten Position befindet und den zweiten Mikroschalter 6 aktiviert, wenn sich die Schnittstelleneinrichtung 4 in der zweiten Position befindet. Durch die jeweilige Aktivierung des ersten oder zweiten Mikroschalters 5, 6 erkennt die Ladevorrichtung 1, ob sich die Schnittstelleneinrichtung 4 in der ersten oder zweiten Position befindet. Der erste und zweite Mikroschalter 5, 6 sind dabei entsprechend mit der Steuerungseinrichtung 3 verbunden.

Darüber hinaus erkennt die Ladevorrichtung 1 auch anhand der Anzahl an Verbindungen zwischen den Anschlusselementen 15a, 15b, 15c, 15d, 16a, 16b, 16c, 16d, 16e und Anbindungselementen 17a, 17b, 17c, 17d, 17e, 18a, 18b, 18c, 18d, 18e, ob sich die Schnittstelleneinrichtung 4 in der ersten oder zweiten Position befindet. Hierzu erkennt die Ladevorrichtung 1, dass in der ersten Position der Schnittstelleneinrichtung 4 das mittlere Anbindungselement 17c keine Verbindung mit einem Anschlusselement 15a, 15b, 15c, 15d der ersten Anschlussstelle 15 aufweist (vgl. Fig. 1). Durch die Verbindung der vier Anbindungselemente 17a, 17b, 17d, 17e mit den vier Anschlusselementen 15a, 15b, 15c, 15d sowie durch das "freie" (d.h. nicht verbundene) fünfte Anbindungselement 17c erkennt die Steuerungseinrichtung 3, dass sich die Schnittstelleneinrichtung 4 in der ersten Position befindet und dass ein erster Akkumulator mit der Schnittstelleneinrichtung 4 verbunden ist bzw. sein kann. Wenn die Steuerungseinrichtung 3 erkennt, dass sich die Schnittstelleneinrichtung 4 in der ersten Position befindet, wird in der Steuerungseinrichtung 3 eine erste Ladekonfiguration zum Laden des ersten Akkumulators gewählt.

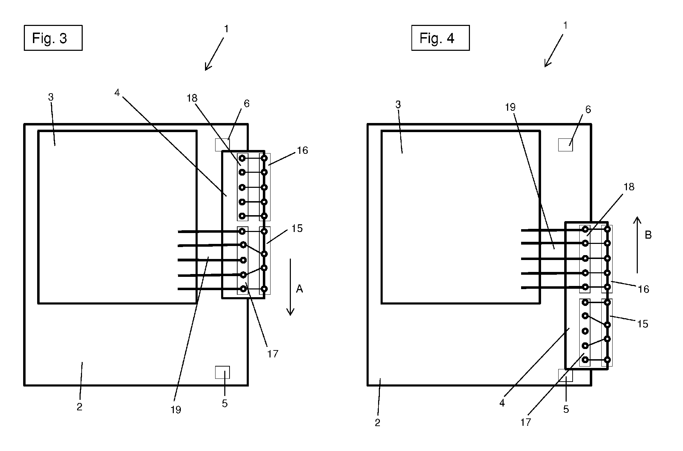

In Fig. 3 und 4 ist eine zweite Ausführungsform der Ladevorrichtung 1 dargestellt. Die Ladevorrichtung 1 gemäß der zweiten Ausführungsform ist im Wesentlichen identisch mit der Ladevorrichtung 1 gemäß der ersten Ausführungsform. In Fig. 3 befindet sich die Schnittstelleneinrichtung 4 in der ersten Position und in Fig. 4 befindet sich die Schnittstelleneinrichtung 4 in der zweiten Position. Im Gegensatz zu der ersten Ausführungsform ist die Ladevorrichtung 1 gemäß der zweiten Ausführungsform so ausgestaltet, dass die Schnittstelleneinrichtung 4 durch ein Verschieben reversibel von der ersten in die zweite Position gebracht werden kann. Zum Wechseln der Schnittstelleneinrichtung 4 von der ersten Position in die zweite Position wird die Schnittstelleneinrichtung 4 in Richtung A relativ zu dem Gehäuse 2 der Ladevorrichtung 1 verschoben (vgl. Fig. 3). Zur Rückführung der Schnittstelleneinrichtung 4 von der zweiten Position in die erste Position wird die Schnittstelleneinrichtung 4 in Richtung B relativ zu dem Gehäuse 2 der Ladevorrichtung 1 verschoben (vgl. Fig. 4).

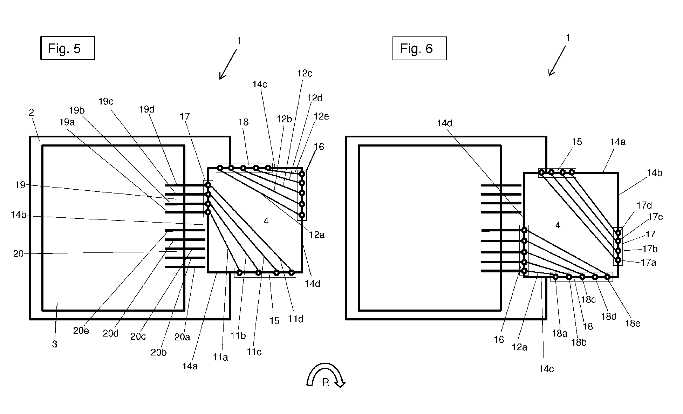

In Fig. 5 und 6 ist eine dritte Ausführungsform der Ladevorrichtung 1 dargestellt. Gemäß der dritten Ausführungsform und im Unterschied zu der ersten Ausführungsform ist die Schnittstelleneinrichtung 4 in Form eines Quaders gestaltet. In Fig. 4 und 5 ist lediglich eine erste Seite 14a, eine zweite Seite 14b, eine dritte Seite 14c und eine vierte Seite 14d dargestellt. Die Schnittstelleneinrichtung 4 enthält dabei eine erste Anschlussstelle 15, eine zweite Anschlussstelle 16, eine erste Anbindungsstelle 17 und eine zweite Anbindungsstelle 18. Wie in Fig. 4 gezeigt, ist die erste Anschlussstelle 15 an der ersten Seite 14a der als Quaders ausgestalteten Schnittstelleneinrichtung 4 positioniert. An der zweiten Seite 14b des Quaders ist die erste Anbindungsstelle 17 positioniert. Die zweite Anschlussstelle 16 ist an der dritten Seite 14c des Quaders positioniert. An der vierten Seite 14d des Quaders ist die zweite Anbindungsstelle 18 positioniert. Die erste Anschlussstelle 15 enthält vier Anschlusselemente 15a, 15b, 15c, 15d und die zweite Anschlussstelle 16 enthält fünf Anschlusselemente 16a, 16b, 16c, 16d, 16e. Die erste Anbindungsstelle 17 enthält vier Anbindungselemente 17a, 17b, 17c, 17d und die zweite Anbindungsstelle 18 enthält fünf Anbindungselemente 18a, 18b, 18c, 18d, 18e. Des Weiteren enthält die Steuerungseinrichtung 4 gemäß der dritten Ausführungsform eine erste Verbindungseinrichtung 19 und eine zweite Verbindungseinrichtung 20. Die erste Verbindungseinrichtung 19 enthält wiederum vier Verbindungsleitungen 19a, 19b, 19c, 19d und die zweite Verbindungseinrichtung 20 enthält fünf Verbindungsleitungen 20a, 20b, 20c, 20d, 20e. Die erste Verbindungseinrichtung 19 dient dazu, die Schnittstelleneinrichtung 4 über die erste Anbindungsstelle 17 mit der Steuerungseinrichtung 3 zu verbinden. Die zweite Verbindungseinrichtung 20 dient dazu, die Schnittstelleneinrichtung 4 über die zweite Anbindungsstelle 18 mit der Steuerungseinrichtung 3 zu verbinden.

In Fig. 5 ist die Schnittstelleneinrichtung 4 in der ersten Position dargestellt, wobei die als Quader ausgestaltete Schnittstelleneinrichtung 4 so zu dem Gehäuse 2 der Ladevorrichtung 1 ausgerichtet ist, dass die erste Anbindungsstelle 17 mit der ersten Verbindungseinrichtung 19 verbunden ist. Die vier Anbindungselemente 17a, 17b, 17c, 17d der ersten Anbindungsstelle 17 sind dabei mit den vier Verbindungsleitungen 19a, 19b, 19c, 19d der ersten Verbindungseinrichtung 19 verbunden. Über vier Anbindungsleitungen 11a, 11 b, 11 c, 11 d stehen die vier Anbindungselemente 17a, 17b, 17c, 17d mit den vier Anschlusselementen 15a, 15b, 15c, 15d in Verbindung. Wenn die erste Anbindungsstelle 17 mit der ersten Verbindungseinrichtung 19 verbunden ist, erkennt die Ladevorrichtung 1 bzw. Steuerungseinrichtung 3, dass sich die Schnittstelleneinrichtung 4 in der ersten Position befindet und dass ein erster Akkumulator an der ersten Anschlussstelle 15 angeschlossen ist oder angeschlossen werden kann. Als Folge dessen wird die erste Ladekonfiguration zum Laden des ersten Akkumulators in der Steuerungseinrichtung 3 ausgewählt und eingestellt.

Um die als Quader ausgestaltete Schnittstelleneinrichtung 4 gemäß der dritten Ausführungsform der Ladevorrichtung 1 von der ersten Position (Fig. 5) in die zweite Position (Fig. 6) zu bewegen, wird die Schnittstelleneinrichtung 4 von dem Gehäuse 2 der Ladevorrichtung 1 entfernt, entsprechend um 180° in Pfeilrichtung R gedreht und wieder mit dem Gehäuse 2 der Ladevorrichtung 1 verbunden (vgl. Fig. 5 zu Fig. 6).

In Fig. 6 ist die Schnittstelleneinrichtung 4 in der zweiten Position dargestellt, wobei die als Quader ausgestaltete Schnittstelleneinrichtung 4 so zu dem Gehäuse 2 der Ladevorrichtung 1 ausgerichtet ist, dass die zweite Anbindungsstelle 17 mit der zweiten Verbindungseinrichtung 20 verbunden ist. Die fünf Anbindungselemente 18a, 18b, 18c, 18d, 18e der zweiten Anbindungsstelle 18 sind dabei mit den fünf Verbindungsleitungen 20a, 20b, 20c, 20d, 20e der zweiten Verbindungseinrichtung 20 verbunden. Über fünf Anbindungsleitungen 12a, 12b, 12c, 12d, 12e stehen die fünf Anbindungselemente 18a, 18b, 18c, 18d, 18e mit den fünf Anschlusselementen 16a, 16b, 16c, 16d, 16e in Verbindung. Wenn die zweite Anbindungsstelle 18 mit der zweiten Verbindungseinrichtung 20 verbunden ist, erkennt die Ladevorrichtung 1 bzw. Steuerungseinrichtung 3, dass sich die Schnittstelleneinrichtung 4 in der zweiten Position befindet und dass ein zweiter Akkumulator an der zweiten Anschlussstelle 16 angeschlossen ist oder angeschlossen werden kann. Als Folge dessen wird die zweite Ladekonfiguration zum Laden des zweiten Akkumulators ausgewählt und eingestellt.

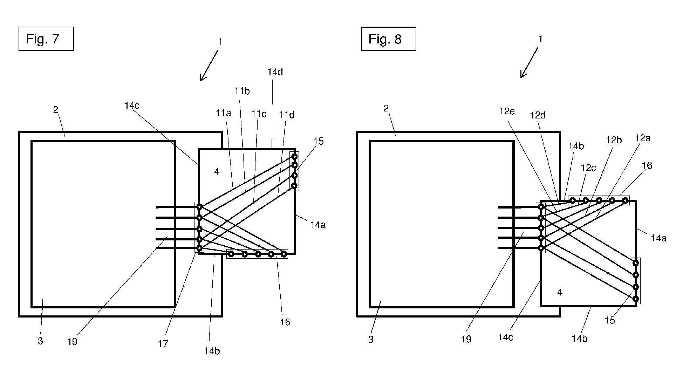

In Fig. 7 und 8 ist eine vierte Ausführungsform der Ladevorrichtung 1 dargestellt. Gemäß der dritten Ausführungsform und im Unterschied zu der ersten Ausführungsform ist die Schnittstelleneinrichtung 4 ebenfalls in Form eines Quaders gestaltet.

In Fig. 7 und 8 ist lediglich eine erste Seite 14a, eine zweite Seite 14b, eine dritte Seite 14c und eine vierte Seite 14d dargestellt. Die Schnittstelleneinrichtung 4 enthält dabei eine erste Anschlussstelle 15, eine zweite Anschlussstelle 16 und eine Anbindungsstelle 17. Wie in Fig. 7 gezeigt, ist die erste Anschlussstelle 15 an der ersten Seite 14a der als Quaders ausgestalteten Schnittstelleneinrichtung 4 positioniert. Die zweite Anschlussstelle 16 ist an der zweiten Seite 14b des Quaders positioniert. An der dritten Seite 14c des Quaders ist die Anbindungsstelle 17 positioniert. Die Ladevorrichtung 1 weist gemäß der vierten Ausführungsform eine Steuerungseinrichtung 3 mit lediglich einer Verbindungseinrichtung 19 samt fünf Verbindungsleitungen 19a, 19b, 19c, 19d, 19e auf. Die fünf Verbindungsleitungen 19a, 19b, 19c, 19d, 19e sind mit den fünf Anbindungselementen 17a, 17b, 17c, 17d, 17e der Anbindungsstelle 17 verbunden. Die Anbindungselemente 17a, 17b, 17c, 17d, 17e sind wiederum über entsprechende Anbindungsleitungen 12a, 12b, 12c, 12d, 12e mit den vier Anschlusselementen 15a, 15b, 15c, 15d der ersten Anschlussstelle 15 sowie mit den fünf Anschlusselementen 16a, 16b, 16c, 16d, 16e der zweiten Anschlussstelle 16 verbunden. Fig. 7 zeigt die Schnittstelleneinrichtung 4 in der ersten Position, in welcher ein erster Akkumulator mit der ersten Anschlussstelle 15 verbunden werden kann. Fig. 8 zeigt die Schnittstelleneinrichtung 4 in der zweiten Position, in welcher ein zweiter Akkumulator mit der zweiten Anschlussstelle 16 verbunden werden kann. Um die Schnittstelleneinrichtung 4 von der ersten Position in die zweite Position zu bringen, muss die Schnittstelleneinrichtung 4 von dem Gehäuse 2 der Ladevorrichtung 1 gelöst werden, um 180° entsprechend gedreht werden und wieder mit dem Gehäuse 2 der Ladevorrichtung 1 verbunden werden.

Wenn sich die Schnittstelleneinrichtung 4 in der ersten Position befindet und ein erster Akkumulator mit der ersten Anschlussstelle 15 verbunden ist, erkennt die Steuerungseinrichtung 4, dass die vier Anschlusselemente 15a, 15b, 15c, 15d der ersten Anschlussstelle 15 mit den vier Kontaktelementen des ersten Akkumulators verbunden sind. Wegen der Verbindung der vier Anschlusselemente 15a, 15b, 15c, 15d der ersten Anschlussstelle 15 an den jeweils besetzten Verbindungsleitungen 19a, 19b, 19c, 19d, 19e erkennt die Steuerungseinrichtung 3, dass ein erster Akkumulator mit der ersten Anschlussstelle 15 verbunden ist. Als Folge dessen wird die erste Ladekonfiguration zum Laden des ersten Akkumulators in der Steuerungseinrichtung 3 ausgewählt und eingestellt.

Wenn sich nun die Schnittstelleneinrichtung 4 in der zweiten Position befindet und ein zweiter Akkumulator mit der zweiten Anschlussstelle 16 verbunden ist, erkennt die Steuerungseinrichtung 3, dass die fünf Anschlusselemente 16a, 16b, 16c, 16d, 16e der zweiten Anschlussstelle 16 mit den fünf Kontaktelementen des zweiten Akkumulators verbunden sind. Wegen der Verbindung der fünf Anschlusselemente 16a, 16b, 16c, 16d, 16e der zweiten Anschlussstelle 16 an den jeweils besetzten Verbindungsleitungen 19a, 19b, 19c, 19d, 19e erkennt die Steuerungseinrichtung 3, dass ein zweiter Akkumulator mit der zweiten Anschlussstelle 16 verbunden ist. Als Folge dessen wird die zweite Ladekonfiguration zum Laden des zweiten Akkumulators in der Steuerungseinrichtung 3 ausgewählt und eingestellt.

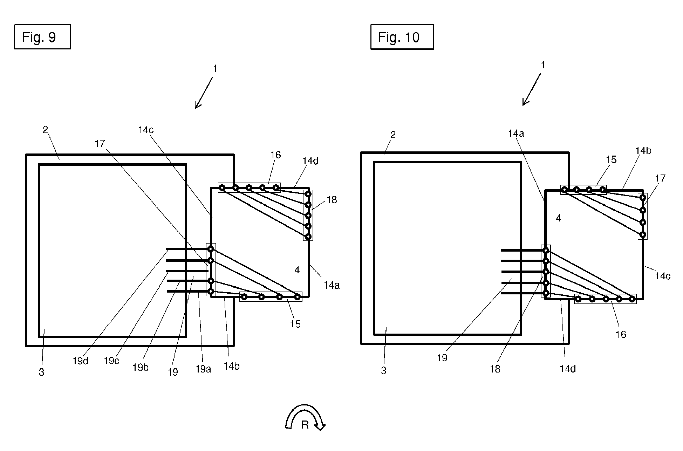

In Fig. 9 und 10 ist eine fünfte Ausführungsform der Ladevorrichtung 1 dargestellt. Die fünfte Ausführungsform der Ladevorrichtung 1 ist im Wesentlichen identisch mit der ersten und zweiten Ausführungsform der Ladevorrichtung 1. Im Gegensatz zu der ersten und zweiten Ausführungsform ist die Schnittstelleneinrichtung 4 in Form eines Quaders ausgestaltet. In den

Fig. 9 und 10 ist lediglich eine erste Seite 14a, eine zweite Seite 14b, eine dritte Seite 14c und eine vierte Seite 14d dargestellt. Die Steuerungseinrichtung 3 enthält eine Verbindungseinrichtung 19 mit fünf Verbindungsleitungen 19a, 19b, 19c, 19d, 19e. Die Schnittstelleneinrichtung 4 enthält eine erste Anschlussstelle 15 mit vier Anschlusselementen 15a, 15b, 15c, 15d sowie eine zweite Anschlussstelle 16 mit fünf Anschlusselementen 16a, 16b, 16c, 16d, 16e. Darüber hinaus enthält die Schnittstelleneinrichtung 4 eine erste Anbindungsstelle 17 mit vier Anbindungselementen 17a, 17b, 17c, 17d sowie eine zweite Anbindungsstelle 18 mit fünf Anbindungselementen 18a, 18b, 18c, 18d, 18e. Die erste Anschlussstelle 15 ist an der zweiten Seite 14b des Quaders positioniert. An der vierten Seite 14d des Quaders ist die zweite Anschlussstelle 16 positioniert. Die erste Anbindungsstelle 17 ist an der dritten Seite 14c des Quaders und die zweite Anbindungsstelle 18 ist an der ersten Seite 14a des Quaders positioniert.

Fig. 9 zeigt die Schnittstelleneinrichtung 4 in der ersten Position, wobei die vier Anschlusselemente 15a, 15b, 15c, 15d der ersten Anschlussstelle 15 über die vier Anbindungsleitungen 11a, 11 b, 11 c, 11 d mit den vier Anbindungselementen 17a, 17b, 17c, 17d der ersten Anbindungsstelle 17 verbunden sind. In der ersten Position sind lediglich vier der fünf Verbindungsleitungen 19a, 19b, 19c, 19d, 19e der Verbindungseinrichtung 19 belegt. Die Verbindungsleitung 19c ist nicht belegt. Durch die Belegung von nur vier der fünf Verbindungsleitungen 19a, 19b, 19c, 19d, 19e erkennt die Steuerungseinrichtung 3, dass sich die Schnittstelleneinrichtung 4 in der ersten Position befindet und das ein erster Akkumulator an der ersten Anschlussstelle 15 angeschlossen ist oder angeschlossen werden kann. Aufgrund des Erkennens der ersten Position und des ersten Akkumulators wird eine erste Ladekonfiguration zum Laden des ersten Akkumulators in der Steuerungseinrichtung 3 ausgewählt und eingestellt.

Um die Schnittstelleneinrichtung 4 von der ersten Position in die zweite Position zu wechseln, muss die Schnittstelleneinrichtung 4 von dem Gehäuse 2 der Ladevorrichtung 1 gelöst, um 180° in Pfeilrichtung R gedreht und wieder mit dem Gehäuse 2 der Ladevorrichtung 1 verbunden werden.

Fig. 10 zeigt die Schnittstelleneinrichtung 4 in der zweiten Position, wobei die fünf Anschlusselemente 16a, 16b, 16c, 16d, 16e der zweiten Anschlussstelle 16 über die Anbindungsleitungen 12a, 12b, 12c, 12d, 12e mit den fünf Anbindungselementen 18a, 18b, 18c, 18d, 18e der zweiten Anbindungsstelle 18 verbunden sind. In der zweiten Position sind die fünf Verbindungsleitungen 19a, 19b, 19c, 19d, 19e der Verbindungseinrichtung 19 belegt. Durch die Belegung der fünf Verbindungsleitungen 19a, 19b, 19c, 19d, 19e erkennt die Steuerungseinrichtung 3, dass sich die Schnittstelleneinrichtung 4 in der zweiten Position befindet und das ein zweiter Akkumulator an der zweiten Anschlussstelle 16 angeschlossen ist oder angeschlossen werden kann. Aufgrund des Erkennens der zweiten Position und des zweiten Akkumulators wird eine zweite Ladekonfiguration zum Laden des zweiten Akkumulators in der Steuerungseinrichtung 3 ausgewählt und eingestellt.

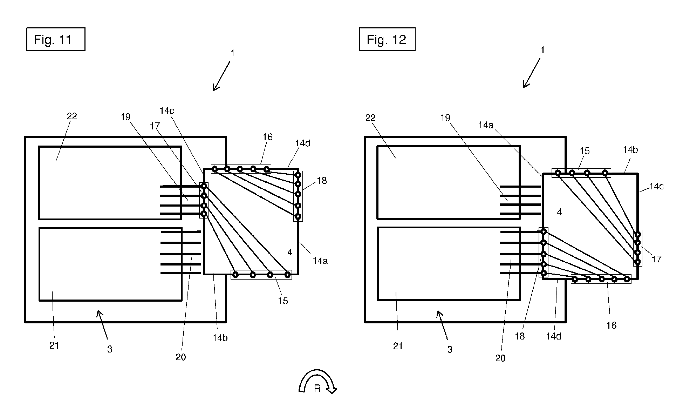

In Fig. 11 und 12 ist eine sechste Ausführungsform der Ladevorrichtung 1 dargestellt. Die sechste Ausführungsform der Ladevorrichtung 1 ist im Wesentlichen identisch mit der fünften Ausführungsform der Ladevorrichtung 1. Die Schnittstelleneinrichtung 4 ist in Form eines Quaders ausgestaltet. In den Fig. 11 und 12 ist lediglich eine erste Seite 14a, eine zweite Seite 14b, eine dritte Seite 14c und eine vierte Seite 14d dargestellt.

Im Unterscheid zu der fünften Ausführungsform der Ladevorrichtung 1 enthält die Steuerungseinrichtung 3 gemäß der sechsten Ausführungsform eine der Ladevorrichtung 1 eine erste Platine 21 mit einer ersten Verbindungseinrichtung 19 samt vier Verbindungsleitungen 19a, 19b, 19c, 19d sowie eine zweite Platine 22 mit einer zweiten Verbindungseinrichtung 20 samt fünf Verbindungsleitungen 20a, 20b, 20c, 20d, 20e. Die erste Platine 21 enthält eine erste Ladekonfiguration zum Laden eines ersten Akkumulators und die zweite Platine 22 enthält eine zweite Ladekonfiguration zum Laden eines zweiten Akkumulators.

Die Schnittstelleneinrichtung 4 gemäß der sechsten Ausführungsform ist identisch mit der Schnittstelleneinrichtung 4 gemäß der fünften Ausführungsform.

Die erste Verbindungseinrichtung 19 dient zur Verbindung der ersten Platine 21 mit der ersten Anbindungsstelle 17 und die zweite Verbindungseinrichtung 20 dient zur Verbindung der zweiten Platine 22 mit der zweiten Anbindungsstelle 18. Die vier Anbindungselemente 17a, 17b, 17c, 17d der ersten Anbindungsstelle 17 sind über die vier Anbindungsleitungen 11a, 11 b, 11 c, 11d mit den vier Anschlusselementen 15a, 15b, 15c, 15d der ersten Anschlussstelle 15 verbunden. Die fünf Anbindungselemente 18a, 18b, 18c, 18d, 18e der zweiten Anbindungsstelle 18 sind über die fünf Anbindungsleitungen 12a, 12b, 12c, 12d, 12e mit den fünf Anschlusselementen 16a, 16b, 16c, 16d, 16e der zweiten Anschlussstelle 16 verbunden.

Wenn sich die Schnittstelleneinrichtung 4 in der ersten Position befindet (vgl. Fig. 11), sind die vier Verbindungsleitungen 19a, 19b, 19c, 19d der ersten Verbindungseinrichtung 19 mit den vier Anbindungselementen 17a, 17b, 17c, 17d der ersten Anbindungsstelle 17 verbunden. Über die vier Anbindungsleitungen 11a, 11 b, 11 c, 11 d sind die vier Anbindungselemente 17a, 17b, 17c, 17d mit den vier Anschlusselementen 15a, 15b, 15c, 15d der ersten Anschlussstelle 15 verbunden. Ein erster Akkumulator kann nun mit der ersten Anschlussstelle 15 verbunden werden. Wenn sich die Schnittstelleneinrichtung 4 in der ersten Position befindet, erkennt die erste Platine 21 anhand der Belegung der vier Verbindungsleitungen 19a, 19b, 19c, 19d durch die vier Anbindungselemente 17a, 17b, 17c, 17d der ersten Anbindungsstelle 17, dass die Schnittstelleneinrichtung 4 in der ersten Position eingestellt ist und dass ein erster Akkumulator mit der ersten Anschlussstelle 15 verbunden ist oder verbunden werden kann. Als Folge dessen wird die erste Ladekonfiguration zum Laden des ersten Akkumulators in der ersten Platine 21 der Steuerungseinrichtung 3 aktiviert.

Um die als Quader ausgestaltete Schnittstelleneinrichtung 4 gemäß der sechsten Ausführungsform der Ladevorrichtung 1 von der ersten Position (Fig. 11) in die zweite Position (Fig. 12) zu bewegen, wird die Schnittstelleneinrichtung 4 von dem Gehäuse 2 der Ladevorrichtung 1 entfernt, entsprechend um 180° in Pfeilrichtung R gedreht und wieder mit dem Gehäuse 2 der Ladevorrichtung 1 verbunden (vgl. Fig. 11 zu Fig. 12).

Wenn sich die Schnittstelleneinrichtung 4 nun in der zweiten Position befindet (vgl. Fig. 12), sind die fünf Verbindungsleitungen 20a, 20b, 20c, 20d, 20e der zweiten Verbindungseinrichtung 20 mit den fünf Anbindungselementen 18a, 18b, 18c, 18d, 18e der zweiten Anbindungsstelle 18 verbunden. Über fünf Anbindungsleitungen 12a, 12b, 12c, 12d, 12e sind die fünf Anbindungselemente 17a, 17b, 17c, 17d, 17e mit den fünf Anschlusselementen 16a, 16b, 16c, 16d, 16e der zweiten Anschlussstelle 16 verbunden. Ein zweiter Akkumulator kann nun mit der zweiten Anschlussstelle 16 verbunden werden. Wenn sich die Schnittstelleneinrichtung 4 in der zweiten Position befindet, erkennt die zweite Platine 22 anhand der Belegung der fünf Verbindungsleitungen 20a, 20b, 20c, 20d, 20e durch die fünf Anbindungselemente 18a, 18b, 18c, 18d, 18e der zweiten Anbindungsstelle 18, dass die Schnittstelleneinrichtung 4 in der zweiten Position eingestellt ist und dass ein zweiter Akkumulator mit der zweiten Anschlussstelle 16 verbunden ist oder verbunden werden kann. Als Folge dessen wird die zweite Ladekonfiguration zum Laden des zweiten Akkumulators in der zweiten Platine 22 der Steuerungseinrichtung 4 aktiviert.

Entsprechend weiterer nicht in den Figuren dargestellter oder näher beschriebener Ausführungsformen ist es möglich, dass die Schnittstelleneinrichtung 4 gemäß der dritten bis sechsten Ausführungsform der Ladevorrichtung 1 (vgl. Fig. 5 bis 12) nicht in Form eines Quaders ausgestaltet ist, sondern in einer anderen geeigneten Form ausgebildet ist.

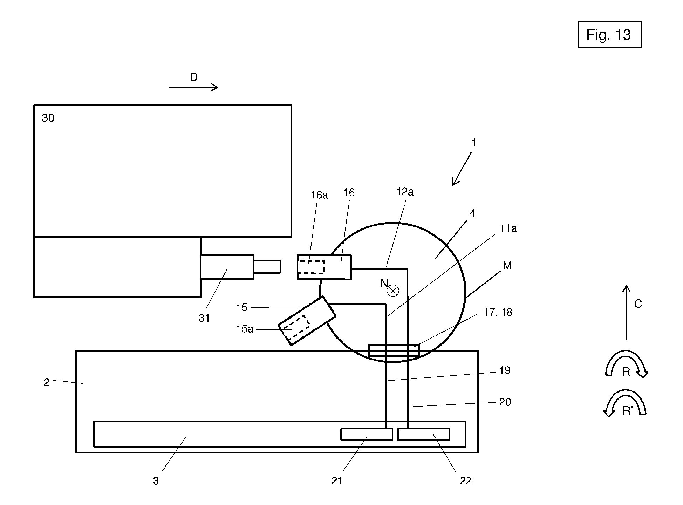

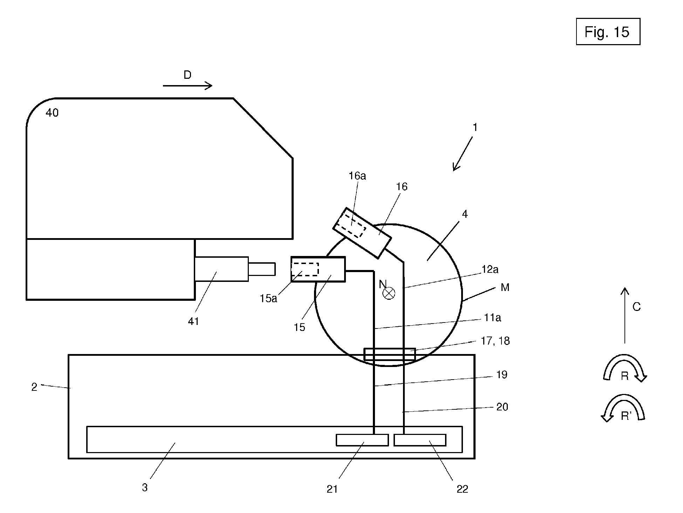

In Fig. 13, 14, 15 und 16 ist eine siebte Ausführungsform der Ladevorrichtung 1 dargestellt, welche im Wesentlichen identisch zu der sechsten Ausführungsform der Ladevorrichtung 1 ist. In den Fig. 13 ist die Ladevorrichtung 1 gemäß der siebten Ausführungsform zusammen mit einem ersten Akkumulator 30 gezeigt. In den Fig. 15 ist die Ladevorrichtung 1 gemäß der siebten Ausführungsform zusammen mit einem zweiten Akkumulator 40 gezeigt.

Gemäß der siebten Ausführungsform und im Unterscheid zu der sechsten Ausführungsform weist die Schnittstelleneinrichtung 4 eine zylindrische Form mit einer im Wesentlichen kreisrunden Querschnittsfläche auf.

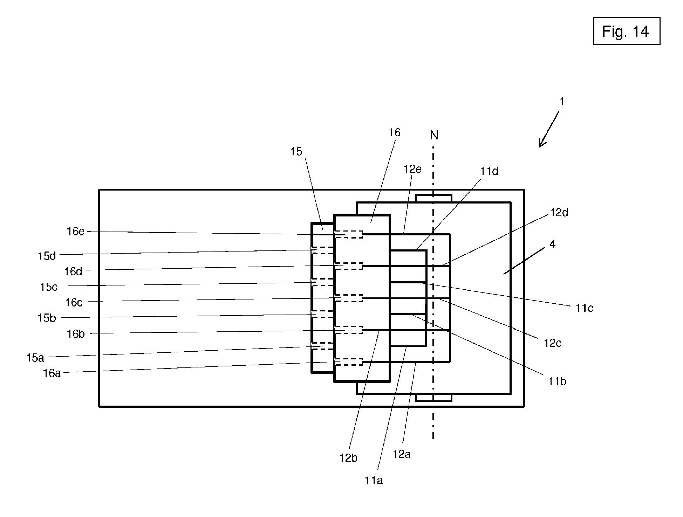

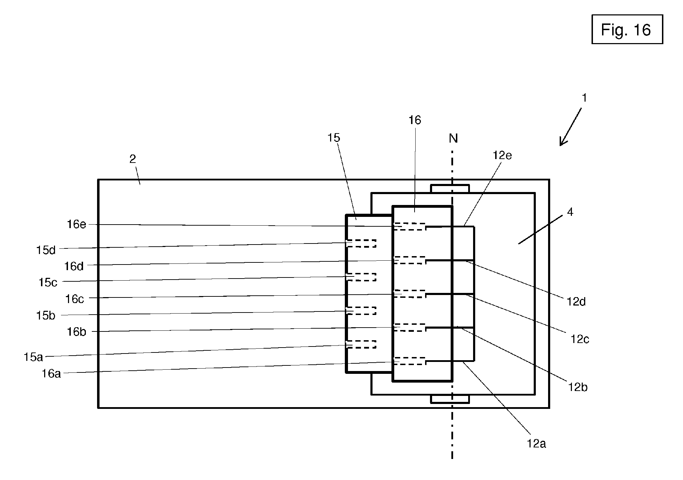

Die Schnittstelleneinrichtung 4 ist reversibel von der ersten Position (Fig. 13, 14) zu der zweiten Position (Fig. 15, 16) und dabei relativ zum Gehäuse 2 der Ladevorrichtung 1 in Richtung R bzw. R' um die Achse P schwenkbar. Die erste Anschlussstelle 15 und die zweite Anschlussstelle 16 sind so an der Mantelfläche M der als Zylinder ausgestalteten Schnittstelleneinrichtung 4 positioniert sind, dass die erste Anschlussstelle 15 in Richtung C unter der zweiten Anschlussstelle 16 angeordnet ist.

Die Verbindung der ersten Anschlussstelle 15 mit der ersten Platine 21 der Steuerungseinrichtung 3 über die vier Anbindungsleitungen 17a, 17b, 17c, 17d und vier Verbindungsleitungen 19a, 19b, 19c, 19d sowie die Verbindung der zweiten Anschlussstelle 16 mit der zweiten Platine 22 der Steuerungseinrichtung 3 über die fünf Anbindungsleitungen 18a, 18b, 18c, 18d, 18e und fünf Verbindungsleitungen 20a, 20b, 20c, 20d, 20e entspricht der Ausführung in Fig. 11 und 12.

Um eine Kontaktstelle 31 des ersten Akkumulators 30 an die erste Anschlussstelle 15 der Schnittstelleneinrichtung 4 anzuschließen, wird die Schnittstelleneinrichtung 4 in die erste Position bewegt und der erste Akkumulator 30 in Richtung D auf die Schnittstelleneinrichtung 4 bewegt (vgl. Fig. 13). Wenn die Kontaktstelle 31 des ersten Akkumulators 30 mit der ersten Anschlussstelle 15 verbunden ist, wird die erste Ladekonfiguration zum Laden des ersten Akkumulators 30 in der ersten Platine 21 der Steuerungseinrichtung 4 aktiviert.

Um hingegen eine Kontaktstelle 41 des zweiten Akkumulators 40 an die zweite Anschlussstelle 16 der Schnittstelleneinrichtung 4 anzuschließen, wird die Schnittstelleneinrichtung 4 in die zweite Position bewegt und der zweite Akkumulator 40 in Richtung D auf die Schnittstelleneinrichtung 4 bewegt (vgl. Fig. 15). Wenn die Kontaktstelle 41 des zweiten Akkumulators 40 mit der zweiten Anschlussstelle 16 verbunden ist, wird die zweite Ladekonfiguration zum Laden des zweiten Akkumulators 40 in der zweiten Platine 22 der Steuerungseinrichtung 4 aktiviert.

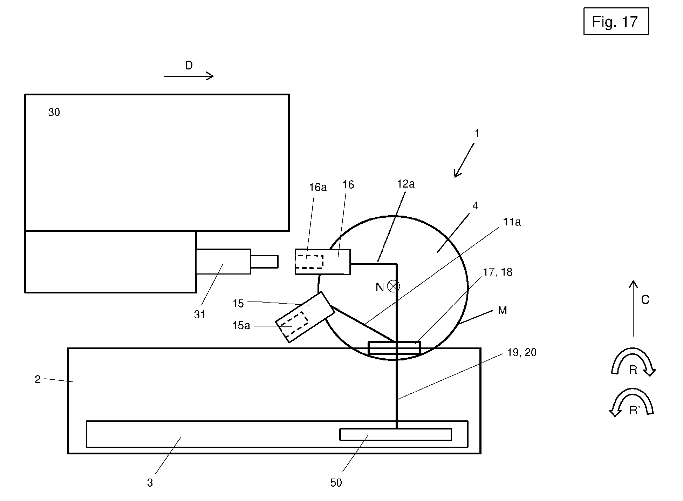

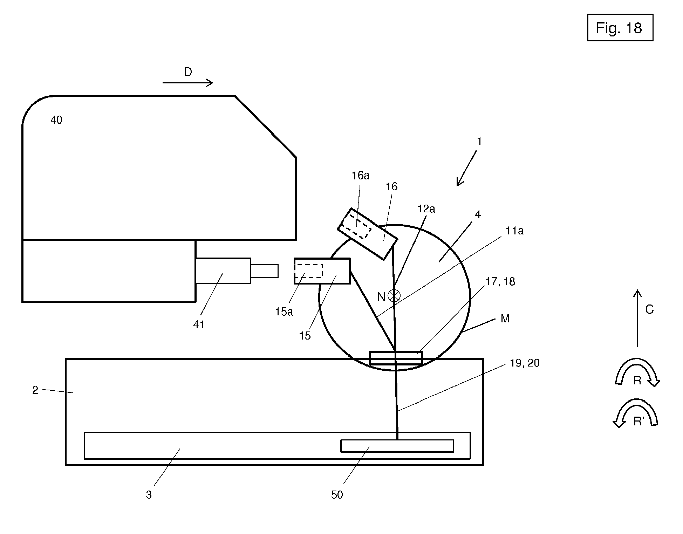

In Fig. 17 und 18 ist eine achte Ausführungsform der Ladevorrichtung 1 dargestellt, welche im Wesentlichen identisch zu der vierten Ausführungsform der Ladevorrichtung 1 ist. In den Fig. 17 ist die Ladevorrichtung 1 gemäß der achten Ausführungsform zusammen mit einem ersten Akkumulator 30 gezeigt. In den Fig. 18 ist die Ladevorrichtung 1 gemäß der achten Ausführungsform zusammen mit einem zweiten Akkumulator 40 gezeigt.

Die der Aufbau der Ladevorrichtung 1 und der Schnittstelleneinrichtung 4 gemäß der achten Ausführungsform entspricht im Wesentlichen dem Aufbau der Ladevorrichtung 1 und der Schnittstelleneinrichtung 4 gemäß der siebten Ausführungsform (vgl. Fig. 13, 14, 15 und 16). Im Unterschied zu der sechsten Ausführungsform enthält die Ladevorrichtung 1 lediglich eine Verbindungseinrichtung 20 samt fünf Verbindungsleitungen 20a, 20b, 20c, 20d, 20e zur Verbindung der Schnittstelleneinrichtung 4 mit der Steuerungseinrichtung 3.

Um die Kontaktstelle 31 des ersten Akkumulators 30 an die erste Anschlussstelle 15 der Schnittstelleneinrichtung 4 anzuschließen, wird die Schnittstelleneinrichtung 4 in die erste Position bewegt und der erste Akkumulator 30 in Richtung D auf die Schnittstelleneinrichtung 4 bewegt (vgl. Fig. 17). Wenn die Kontaktstelle 31 des ersten Akkumulators 30 mit der ersten Anschlussstelle 15 verbunden ist, wird die erste Ladekonfiguration zum Laden des ersten Akkumulators 30 in der Platine 50 der Steuerungseinrichtung 3 aktiviert.

Um hingegen die Kontaktstelle 41 des zweiten Akkumulators 40 an die zweite Anschlussstelle 16 der Schnittstelleneinrichtung 4 anzuschließen, wird die Schnittstelleneinrichtung 4 in die zweite Position bewegt und der zweite Akkumulator 40 in Richtung D auf die Schnittstelleneinrichtung 4 bewegt (vgl. Fig. 18). Wenn die Kontaktstelle 41 des zweiten Akkumulators 40 mit der zweiten Anschlussstelle 16 verbunden ist, wird die zweite Ladekonfiguration zum Laden des zweiten Akkumulators 40 in der Platine 50 der Steuerungseinrichtung 3 aktiviert.

Die Aktivierung der ersten oder zweiten Ladekonfiguration zum Laden des ersten oder zweiten Akkumulators 30, 40 erfolgt nachdem die Steuerungseinrichtung 3 erkennt, dass der erste oder zweite Akkumulator 30, 40 mit der ersten oder zweiten Anschlussstelle 15, 16 verbunden ist. Die Erkennung geschieht anhand der Einstellung der Schnittstelleneinrichtung 4 in der ersten oder zweiten Position mittels eines nicht gezeigten Mikroschalters.

Alternativ erfolgt die Erkennung anhand der Übertragung einer Information bzw. Datensatzes über eine der Anbindungsleitungen 11a, 11b, 11c, 11 d, 12a, 12b, 12c, 12d, 12e und Verbindungsleitungen 20a, 20b, 20c, 20d, 20e von dem jeweiligen Akkumulator 30, 40 zu der Steuerungseinrichtung 3. Der jeweilige erste oder zweite Akkumulator 30, 40 übersendet der Steuerungseinrichtung 3 eine Kennung für seine Identifikation.

Alternativ erfolgt die Erkennung anhand der Anzahl der jeweils belegten Verbindungsleitungen 20a, 20b, 20c, 20d, 20e, wobei lediglich vier Verbindungsleitungen 20a, 20b, 20d, 20e belegt sind, wenn der erste Akkumulator 30 mit der ersten Anschlussstelle 15 verbunden ist und hingegen fünf Verbindungsleitungen 20a, 20b, 20c, 20d, 20e belegt sind, wenn der zweite Akkumulator 40 mit der zweiten Anschlussstelle 16 verbunden ist. Die Belegung der Verbindungsleitungen 20a, 20b, 20c, 20d, 20e wird von der Steuerungseinrichtung 3 erkannt, wodurch entsprechend die erste Ladekonfiguration oder zweite Ladekonfiguration zum Laden des ersten Akkumulators 30 oder zweiten Akkumulators 40 aktiviert wird.

## Patentansprüche

1. Ladevorrichtung (1) zum Laden wenigstens eines Akkumulators (30, 40), enthaltend
- eine Steuerungseinrichtung (3); und
- wenigstens eine elektromechanische Schnittstelleneinrichtung (4) zum Verbinden wenigstens eines Akkumulators (30, 40) mit der Ladevorrichtung (1) sowie zum Versorgen des Akkumulators (30, 40) mit einer elektrischer Spannung,
**dadurch gekennzeichnet, dass** die Schnittstelleneinrichtung (4) wenigstens eine erste Anschlussstelle (15) und eine zweite Anschlussstelle (16) enthält und die Schnittstelleneinrichtung (4) in wenigstens eine erste Position und in eine zweite Position einstellbar ist, wobei die erste Anschlussstelle (15) zum Laden eines ersten Akkumulators (30) verwendbar ist, wenn die Schnittstelleneinrichtung (4) in der ersten Position eingestellt ist und die zweite Anschlussstelle (16) zum Laden eines zweiten Akkumulators (40) verwendbar ist, wenn die Schnittstelleneinrichtung (4) in der zweiten Position eingestellt ist.

2. Ladevorrichtung (1) nach Anspruch 1,
**dadurch gekennzeichnet, dass** die erste Anschlussstelle (15) eine erste Anzahl an Anschlusselementen (15a, 15b, 15c, 15d) und die zweite Anschlussstelle (16) eine zweite Anzahl an Anschlusselementen (16a, 16b, 16c, 16d, 16e) enthält, wobei die erste Anzahl an Anschlusselementen (15a, 15b, 15c, 15d) einer Anzahl an Kontaktelementen des ersten Akkumulators (30) und die zweite Anzahl an Anschlusselementen (16a, 16b, 16c, 16d, 16e) einer Anzahl an Kontaktelementen des zweiten Akkumulators (40) entspricht.

3. Ladevorrichtung (1) nach Anspruch 1 oder 2,
**dadurch gekennzeichnet, dass** eine erste Ladekonfiguration zum Laden des ersten Akkumulators (30) gewählt wird, wenn die Schnittstelleneinrichtung (4) in der ersten Position eingestellt ist und der erste Akkumulator (30) mit der ersten Anschlussstelle (15) verbunden ist, und dass eine zweite Ladekonfiguration zum Laden des zweiten Akkumulators (40) gewählt wird, wenn die Schnittstelleneinrichtung (4) in der zweiten Position eingestellt ist und der zweite Akkumulator (40) mit der zweiten Anschlussstelle (16) verbunden ist.

4. Ladevorrichtung (1) nach wenigstens einem der Ansprüche 1 bis 3,
**dadurch gekennzeichnet, dass** die Schnittstelleneinrichtung (4) eine Anbindungsstelle (18) mit einer Anzahl an Anbindungselementen (18a, 18b, 18c, 18d, 18e) zum Verbinden der Schnittstelleneinrichtung (4) mit der Steuerungseinrichtung (3) enthält, wobei die Anzahl an Anbindungselementen (18a, 18b, 18c, 18d, 18e) der größeren Anzahl an Anschlusselementen (15a, 15b, 15c, 15d; 16a, 16b, 16c, 16d, 16e) der ersten oder zweiten Anschlussstelle (15, 16) entspricht.

5. Ladevorrichtung (1) nach wenigstens einem der Ansprüche 1 bis 3,
**dadurch gekennzeichnet, dass** die Schnittstelleneinrichtung (4) eine erste Anbindungsstelle (17) und eine zweite Anbindungsstelle (18) enthält zum Verbinden der Schnittstelleneinrichtung (4) mit der Steuerungseinrichtung (3), wobei die erste Anbindungsstelle (17) eine erste Anzahl an Anbindungselementen (17a, 17b, 17c, 17d) und die zweite Anbindungsstelle (18) eine zweite Anzahl an Anbindungselementen (18a, 18b, 18c, 18d, 18e) enthält, wobei die erste Anzahl an Anbindungselementen (17a, 17b, 17c, 17d) der ersten Anzahl an Anschlusselementen (15a, 15b, 15c, 15d) und die zweite Anzahl an Anbindungselementen (18a, 18b, 18c, 18d, 18e) der zweiten Anzahl an Anschlusselementen (16a, 16b, 16c, 16d, 16e) entspricht.

6. Ladevorrichtung (1) nach Anspruch 4 oder 5,
**dadurch gekennzeichnet, dass** anhand der Anzahl an Verbindungen zwischen Anschlusselementen (15a, 15b, 15c, 15d; 16a, 16b, 16c, 16d, 16e) und Anbindungselementen (17a, 17b, 17c, 17d; 18a, 18b, 18c, 18d, 18e) die erste oder zweite Position der Schnittstelleneinrichtung (4) und/oder der erste oder zweite Akkumulator (30, 40), welcher mit der Schnittstelleneinrichtung (4) verbunden ist, erkennbar ist.

7. Ladevorrichtung (1) nach wenigstens einem der Ansprüche 1 bis 6,
**dadurch gekennzeichnet, dass** mindestens ein Anschlusselement (15a, 15b, 15c, 15d) der ersten Anschlussstelle (15) sowie mindestens ein Anschlusselement (16a, 16b, 16c, 16d, 16e) der zweiten Anschlussstelle (16) wenigstens zum Empfangen von Informationen von dem ersten Akkumulator (30) und dem zweiten Akkumulator (40) an die Ladevorrichtung (1) ausgestaltet ist, sodass entsprechend dem jeweils angeschlossenen ersten oder zweiten Akkumulator (30, 40) eine erste Ladekonfiguration zum Laden des ersten Akkumulators (30) oder eine zweite Ladekonfiguration zum Laden des zweiten Akkumulators (40) einstellbar ist.

8. Ladevorrichtung (1) nach wenigstens einem der Ansprüche 1 bis 7,
**dadurch gekennzeichnet, dass** wenigstens ein Mikroschalter (5, 6) vorgesehen ist zum Erkennen, ob die Schnittstelleneinrichtung (4) in der ersten Position oder zweiten Position eingestellt ist.
